# EUROPEAN PATENT APPLICATION

(11) **EP 2 581 539 A1**
(43) Date of publication of application: **17.04.2013**
(21) Application number: 12187883.9
(22) Date of filing: 10.10.2012
(51) Int. Cl.: E06B 3/263

(54) **Building component**

(30) Priority: 13.10.2011 SE 1150949
(71) Applicant: Stora Enso Oyj, 00101 Helsinki (FI)
(72) Inventor: Brännström, Mattias, 79022 Sågmyra (SE); Källander, Björn, 78561 Djurås (SE); Tigerstrand, Jörgen, 78478 Borlänge (SE); Myyryläinen, Matti, 53830 Laapeenranta (FI); Silén, Jouko, 11100 Riihimäki (FI)
(74) Representative: Lindberg, Berndt Åke

(57) **Abstract**

The present invention relates to a building component having a low thermal conductivity value comprising wood material having a 90^{th} percentile density of between 300 and 460 kg/m³, i.e. a low density wood material. The present invention also relates to building components such as window components, i.e. sashes and frames and door components such as door frames, and window insulation materials comprising the low density wood material. The present invention further relates to a method for sorting out wood material having a low density.

## Description

### Technical field

The present invention relates to a building component comprising a wood material having a 90^{th} percentile density of between 300 and 460 kg/m³, i.e. a low density wood material.

More particularly, the present invention relates to building components such as window components, i.e. sashes and frames and door components such as door frames, and window insulation materials comprising the low density wood material.

The present invention also relates to a method for sorting out wood material having a low density.

### Background

Today demands on heat insulation of building components are continually increasing. For a window the increasing demands means that traditional constructions can no longer be installed in newly built houses after 2015. New constructions and materials must be used. Houses, commonly known as "passive houses", are more and more viewed as the coming standard manner when building new houses. By passive house is meant a building having minimal heat losses, which means that there is no need for additional heating except for short periods.

Since additional heating not is used, the interior comfort requires that there are no downdraughts at windows or cold outer walls. A passive house should also be wind-proof such that draughts don't occur, and there are thus increasing demands also for e.g. closer fits of the sash and frame of windows.

The U-value of a window is mainly governed by the glass package, the construction of the sash and frame, and the fixation into the wall. Examples of influencing factors are the gas and the spacers between the glass panes, seals between sash and frame, and the position and tightness of the frame fixation into the wall. The insulation properties of glass and spacers are today close to what is technically and economically feasible, and there are no longer any major improvements expected to be made. Today's development of the window as building component is foremost of the frame and sash.

During recent years a great number of new sash and frame constructions have been launched to improve the heat insulation. Layers of insulation materials that are being glued into the sash and frame, or complicated hollow structures are being used to reduce the heat transfer through the window construction.

These types of constructions are far more complex than traditional wooden, aluminium, or PVC based windows which increases the costs. At the same time the mixture of different types of materials makes recycling and destruction more difficult.

### Summary

It is an object of the present disclosure, to provide an improved or alternative building component, which eliminates or alleviates at least some of the disadvantages of the prior art building materials.

A specific object of the present disclosure is to provide an improved or alternative window component.

The invention is defined by the appended independent claims. Embodiments are set forth in the appended dependent claims and in the following description and drawings.

According to a first aspect, there is provided a building component having a low thermal conductivity value comprising wood material having a density distribution showing a 90^{th} percentile between 300 and 460 kg/m³.

By the 90th percentile is meant the value (or score) below which 90 percent of the wood material may be found. By "wood density" is meant the total weight per unit volume of wood including moisture.

It is the surprising effect that wood material with a density between 300 and 460 kg/m³, which is generally considered to be a very low density wood material that traditionally has not been considered to be suitable material for building components due to shape stability requirements, can actually not only function as a stable and durable material for a building component but also provide a component that gives a low U-value. These building components may thus have improved heat insulating properties through the wood material having an extra low density of solid substances.

The established methods to design and produce wooden windows are to a large extent based on traditions and utilize quality control systems partly based on secondary parameters. Such secondary parameters are density and growth ring width, where wood with high density and narrow growth rings is selected in order to provide a window with good durability, dimensional stability, and appealing surface properties. One example of such secondary requirements is the Danish requirement stating that the 20-percentile of the wood density must not be below 480 kg/m³. High wood density is by tradition considered a pre requisite in order to produce a good window. However, with modern sorting and scanning technique it is possible to select the raw material directly towards the primary parameters like durability or dimensional stability. The secondary parameters are no longer needed.

By "low thermal conductivity value" is meant a window component providing a low U-value. The U-value is standardized value as a measure of the heat transmission through a building part as a wall or a window or a given thickness of a material where lower numbers indicate better insulation properties. The U-value of the component should not be mixed up with the lambda value of the material, which is not depending on the thickness or size of the material.

This low density wood material may further come from wood material , such as logs, sorted out from a usual production, thus rendering the building component production very cost efficient and environmentally friendly. By usual production is meant that this wood material may be sorted out and divided from the material which is normally used for producing e.g. window components.

The surprising results indicate that building components made from low density wood can be used as an economic and stable alternative to more complex composite designs where wood and insulation materials are combined, or as a means to further improve the properties of such composite designs.

The component may be made from solid wood material.

The wood material may thus be from e.g. a pine or spruce source. Thus it is also the lightest logs of these types of timber that are selected to form the building component. This is from a traditional point of view against all known rules for selecting wood material for building components as it is well known that wood material having a high density, i.e. a heavy material provides a better building component.

According to one embodiment the lambda value of the wood material may be in the range of 0.07 and 0.11 W/mK.

According to one embodiment of the first aspect the building component is a window component.

This thus means that the wood material having a low density may be sorted out from wood material already being intended for use as window components and thus means that a higher percentage of the total wood material may now be used for that purpose. This is thus different from using wood material having an inherently low density such as balsa wood, or using lamella of low density wood materials such as balsa wood, which is also generally recognised as nor being able to take heavy loads if the material is too light, i.e. has a too low density. Typically a low lambda value for wood used for a window component is around 0.09 - 0.1 W/mK.

According to this embodiment, at least one of the sash or frame of said window component may comprise a wood lamella made from said wood material having a 90^{th} percentile density of between 300 and 460 kg/m³.

According to an alternative embodiment the component may be a door component. The door component may thus be a door frame.

According to yet an alternative embodiment of the first aspect the component may be an insulation material made from said wood material having a 90^{th} percentile density of between 300 and 450 kg/m³

This insulation material may be used together with other conventional types of window components such as normal density spruce or pine, or even in composite windows. The insulation material may further be used together with other window components having a low density. The insulation material may thus be arranged as an insulation layer in e.g. a window component.

The building component may be thermally modified.

The thermal modification or the "heat treatment" of the component also provides for an even better shape and form stability, since heat treated woods are less prone to absorbing moisture, i.e. absorbs less moisture than non-heat treated wood. This means that it swells and shrinks to a lesser extent than regular, non-heat treated wood.

For a window or window component this means that the crevice or gap between the sash and the frame may be made smaller without the risk of the window swelling so much that it can't be opened at times. Smaller crevices provides for a lesser heat transmission and thus a better insulation.

The heat treatment also provides for a way to even further reduce the density of the component as well as it provides for a protection against decay of the material. By using the shape stability for a window construction allowing less play between the sash and frame even further advantages is to be gained.

The heat treatment process may be performed using conventional methods, by treating the wood at a high temperature with steam such by the method disclosed in EP0695408.

Wood material that may be treated by this method includes pine, spruce, birch, aspen and alder.

The thermal modification or heat treatment provides for a window component having an even lower density than the unmodified component. The heat treatment further provides for an even better shape and form stability, since heat treated woods are less prone to absorbing moisture, i.e. absorbs less moisture than non-heat treated wood. This means that it swells and shrinks to a lesser extent than regular, non-heat treated wood.

The wood material may further comprise heartwood of pine having pinosylvine contents of more than 5 mg/g.

The pinosylvine acts as a natural wood preservative and renders the pine wood more resistant to decay and rotting. Heartwood from Swedish pine is usually considered to be very rot-resistant when used above ground and is thus considered to be a good material for use in e.g. windows. The combination of a wood material having a low density with a high pinosylvine contents may thus provide for a window component having a low U-value, yet being well suited for use as a component which must withstand the wear of the surroundings and decay.

According to a second aspect there is provided a window frame comprising at least one wood lamella made from a wood material having a 90^{th} percentile density of between 300 and 460 kg/m³.

According to a third aspect there is provided a wood lamella which has been made form a wood material having a 90^{th} percentile density of between 350 and 440 kg/m³.

This material may be pine or heat treated or thermally modified spruce having a low density. The lambda value for this wood material may further be in the range of 0.085-0.1 W/mK.

According to a fourth aspect there is provided a wood lamella which is made from a wood material having a 90^{th} percentile density of between 350 and 400 kg/m³.

This type of material may be a thermally modified or heat treated pine having a low density. The lambda value for this wood material may further be in the range of 0.085-0.093 W/mK.

There is further provided a wood lamella characterized in that it is made from a thermally treated wood material and having a swelling and shrinking over the width of material which is less than 1 % in the range of a relative humidity (RH) of 35% - 95 %.

By swelling and shrinking is meant the relative dimensional change as measured according to European standard EN 1910 "Wood and parquet flooring and wood panelling and cladding - determination of dimensional stability".

According to a fifth aspect there is provided a method for sorting out wood material having a 90^{th} percentile density of 300-460 kg/m³ comprising the steps of, selection of suitable classes of logs, analyzing the selected logs with an X-ray apparatus for a density measurement of the logs, and cutting the logs into boards.

The method according to the fifth aspect may further comprise the step of performing a density measurement of the boards by using a density measurement device.

By suitable classes is meant logs suitable for the production of window components, such as logs having a relatively low portion of knots.

The density measurement device may be a gamma radiation device or a microwave operated device.

According to one alternative method, a window component made from a wood material having a low density, i.e. a density in the range of 300-460 kg/m³, may be produced according to the following steps. Timber or logs having low density may be sorted out from the timber normally used for producing window components and cut into planks or boards. Through a second density measurement these planks or boards may then be further sorted based on their density. Optionally the planks or boards may be split and any knots and other impurities may be cut out from the plank or board. The plank or board pieces thus obtained may then be end jointed together to form a single lamella of the same board or plank, but without the impurities. Two or more lamellae may then be attached to each other, e.g. by gluing the lamellae, to form for instance wider or L-shaped blanks.

### Brief Description of the Drawings

Embodiments of the present solution will now be described, by way of example, with reference to the accompanying schematic drawings.
Fig. 1 is a schematic side view of a window system having a wood frame provided with an insulation layer in sash and frame.
Fig. 2 is a schematic side view of a window system having a solid wood sash and frame.
Fig. 3 is a schematic side view of the calculated temperature distribution in a window system having a wood sash and frame with normal density pinewood.
Fig. 4 is a schematic side view of the calculated temperature distribution in a window system having a wood sash and frame provided with an insulation layer.
Fig. 5 is a schematic side view of the calculated temperature distribution in a window system having a low density wood sash and frame.
Fig. 6 is a diagram showing the linear correlation between density and Declared lambda value of Stora Enso pinewood products.

### Description of Embodiments

The material for the window component may be sorted from the wood that is normally used for windows. The material may be sorted out by the following method, which should not be construed as the only manner in which the wood material may be selected but as an example.

In a first step suitable classes of logs are selected where the proportion of heartwood is sufficiently high and the knot structure is suitable. It is desirable to have fewer big knots than many smaller knots which are spread throughout the material in order to be able to cut them out and provide for an entirely knot free material.

In a second step the logs are being sent through an X-ray scanner at the sorting at the saw mill. Through X-ray measurements the density of the wood material may be determined and the logs with lower density are then being selected. The wood material having low density and the wood material having high density may then be cut into smaller pieces or boards in separate batches.

The precision of the X-ray measurement may be influenced by the water present in the timber, but it is still sufficient to be able to select the logs having high and low density respectively.

In a third step, at the component line and the cutting of the boards to blanks, a density measurement device is used to check the density of the boards.

Since the wood material in the component line is dried, the moisture variation in the material is greatly reduced. The reduced moisture variation improves the accuracy of density measurement and hence allows for a reduction of the "upper tail" of the density distribution of the material. The density measurement device may be based on for instance gamma radiation or micro waves.

The raw material, i.e. the input timber may thus be conventional pine or spruce timber.

A benefit from the sorting procedure is that it is mainly the upper end of the density distribution is affected. The lower end of the density distribution is not affected, which has the positive effect that the characteristic strength properties of the material as defined by the 5th percentile of each parameter are influenced only to a minor degree.

For the production of window components the blanks are being cut to excise knots and other defects and then end jointed to desired lengths. Lamellae and blanks may then be put together to form low thermal conductivity building or window components at a fundamentally lower cost and with reduced environmental impact.

The insulation properties of a building component may be even further improved by treatment at an elevated temperature to provide for a thermal modification, by conventional methods as those disclosed in EP0695408.

By low thermal conductivity is in this regard a building component made from a wood material having a lambda value below 0,1 W/mK, as well as window frame and sash having a combined U-value below 1,2 W/m²K.

In the following the influence of material selection on heat conductivity of window sashes and frames has been determined and the results of these experiments are shown below, for different window designs. The U-values of different profiles have been calculated, and the impact of various combinations of materials has been compared.

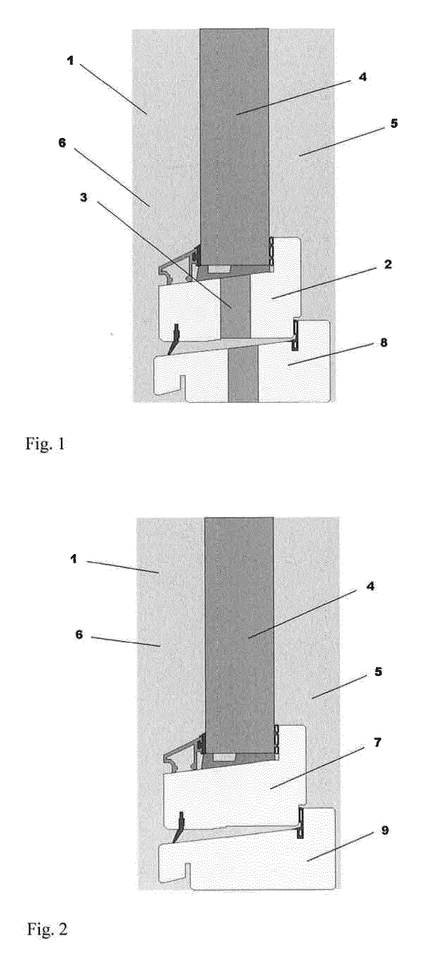

Fig 1 illustrates a window system 1 which has been used for the measurements and simulations of the thermal conductivity of the window component and profile. The window system in Fig 1 is provided with a wood sash 2, a wood frame 8, and an insulation layer 3 arranged in both the sash 2 and frame 8. The window system 1 further comprises a glass package 4, which in the simulations is represented by an insulation layer corresponding to the thickness of a glass package with triple 4 mm glass and 16 mm spacers.

Fig 2 illustrates a window system 1 having a solid wood sash 7 and frame 9. The window package 4 may also in this embodiment be a triple-glazed window.

In both Figs 1 and 2, the window system faces an exterior, i.e. an outside 6 and an interior, i.e. an inside 5.

The results show that windows made from low density wood can be used as an economic alternative to more complex composite designs where wood and insulation materials are combined, or as a means to further improve the properties of such composite designs.

Additional improvement can be reached by utilizing the dimensional stability of the thermal modification or heat treatment to minimize gaps between sash and frame, reducing convective heat transfer from air movement.

The results clearly points out the importance of adopting the design to the used materials. An efficient use of low density wood material, low density wood material which has been heat treated, or combinations with insulation material will all benefit from specific designs.

### Methods

The calculation is made according to European standard EN ISO 10077-2. The calculations have been made with the software "Bisco" from Physibel, modelling steady state heat transfer in two dimensions.

Calculations have been made on four different variables:
1. Solid pine wood having a normal density and a lambda value of 0.13 W/mK.
2. Solid pine wood having a normal density further comprising a 19 mm insulation layer of lambda value of 0.04 W/mK, representing for instance PUR.
3. Low density wood material, pine, having a lambda value of 0.095 W/mK.
4. Low density wood material, pine, further comprising a 19 mm insulation layer of lambda value of 0.04 W/mK.

Table 1 shows that the use of low density pine, either as solid wood frame or as a frame comprising an insulation layer clearly improves the U-value, i.e. the thermal conductivity of the window component or frame as compared to a normal window component comprising pine wood having a density which is conventionally used for forming window components.

Table 1 further shows that by using only low density pine wood material a U-value compared to that of a normal window frame with an insulation layer may be achieved and that by combining a low density wood material, such as pine, with an insulation layer the U-value may be significantly improved.

These values would clearly fulfil the requirements set for so called passive houses.

**Table 1. Results of calculation of U-value of window frame**

| Variant | Lambda wood (W/mK) | Lambda insulation (W/mK) | U-value window frame (W/m2K) | Improvement (%) |
|---|---|---|---|---|
| Solid normal Pine | 0,13 | -- | 1,143 | -- |
| Insulation + normal pine | 0,13 | 0,04 | 0,942 | 17,6 |
| Low density pine | 0,095 | -- | 0,947 | 17,1 |
| Insulation + low density pine | 0,095 | 0,04 | 0,837 | 26,8 |

Design lambda values for different building materials are stated by European standard EN 12524. For softwoods like pine, spruce, or larch the design value is 0.13 W/mK, and for hardwoods like oak and ash the design value is 0.18 W/mK. If measurements on the specific material have been done, a declared lambda value can be stated which can reduce the value.

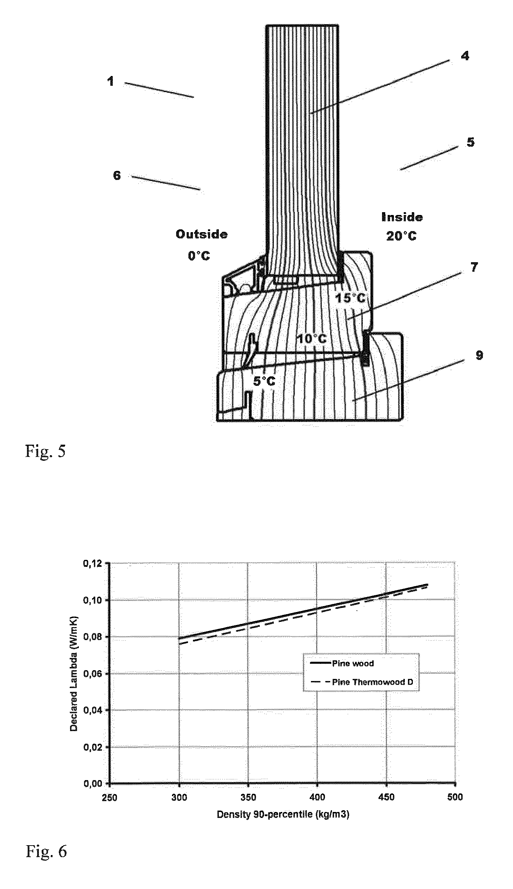

For wood materials there is a linear correlation between the density and the thermal conductivity. The correlations are in principal similar for all wood materials as for all heat treated, i.e. thermally modified wood materials. Measurements made by SP Technical Research Institute of Sweden have determined the linear correlation between density and lambda value for Stora Enso Wood based products, as shown in Figure 6.

From these calculations the 90^{th} percentile for each desired lambda value may be determined. This means that a density of 440 kg/m³ gives a lambda value of 0,1 W/mK, a density of 380 kg/m³ gives a lambda value of 0,09 W/mK, and a density of 320 kg/m³ gives a lambda value of 0,08 W/mK. These values have been theoretically calculated as well as measured and verified by the SP Technical Research Institute of Sweden.

The various build ups of the frames have been tested using different lambda values to determine the impact on U-frame. However, the U-values of the entire windows have not been calculated since this would require knowledge about fixings and hinges which were not known at the time of testing and simulation.

The calculations of the thermal conductivity of the window systems have been made in the following sequence:
1) Preparation of bitmap drawings of each window design with known materials and heat conductivity values inserted, followed by calculation of the U value of the unmodified frame.
2) Replacement of materials in the design without altering any cross sections, and calculation of U-values of the new material combination.

### Results

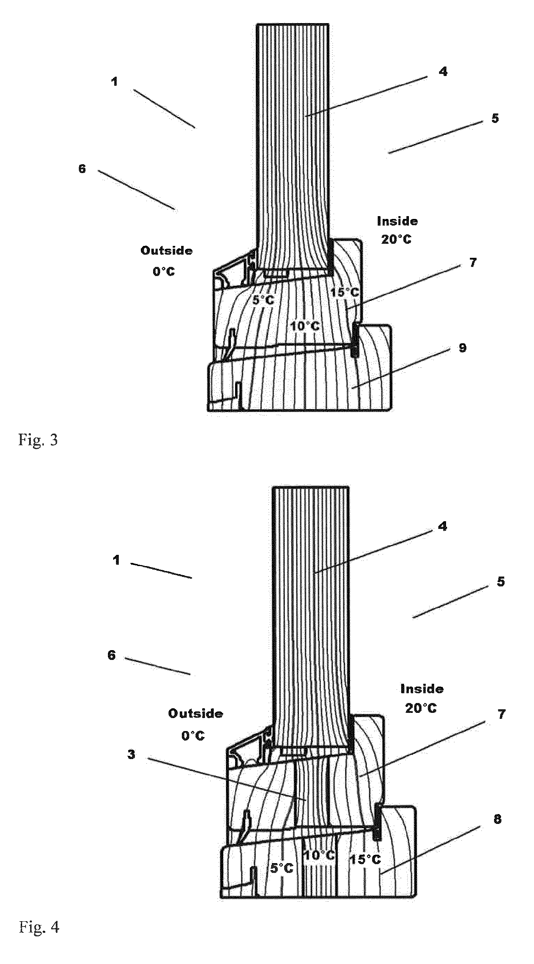

The results of the calculation are shown graphically and in figures. Typical graphic results are shown in Figures 3, 4, and 5 where isothermal lines are marked. Figure 3 illustrates the temperature and heat flow in a window frame comprising a solid pine material of normal density having a lambda value of 0.13 W/mK. Figure 4 illustrates as a graphic presentation the temperature and heat distribution in a normal density pine wood window frame comprising an insulation layer having a lambda value of 0,04 W/mK. The positive impact of the insulation is clearly seen as the isothermal lines are close to each other in the insulation layer, and that the temperature of the inside of the frame is slightly higher.

It is critical that the insulation material form a tight barrier across the heat flow through the frame and sash without gaps. The insulation shall be placed where the temperature gradient is steep, such as in direct contact with the glass package and seals.

The insulation seems to provide a greater improvement of the properties the more advanced the window design is. Flaws in the design quickly reduce the positive influence of the insulation. Details like extra seals and reduced width of gaps can have as much influence as the insulation layer. All details need to be correct. In a poorly designed window, the wood material will have a greater impact.

Figure 5 illustrates the temperature and heat flow in a window frame comprising a solid low density pine material having a lambda value of 0,095 W/mK.

A comparison between Figs 3, 4, and 5 clearly show that both the composite frame made from insulation and wood, and the solid low density wood component as shown in Fig 5 provides for a reduction in heat flow, in that these window component provides a better insulation, and less heat leakage from the inside to the outside. The improved insulation properties not only lead to reduced heat loss, but also lead to a higher surface temperature on the inside with reduced risk for condensation and mould growth in cold periods.

In view of the above detailed description of the present invention, other modifications and variations will become apparent to those skilled in the art. However, it should be apparent that such other modifications and variations may be effected without departing from the spirit and scope of the invention.

## Claims

1. A building component having a low thermal conductivity value **characterized in that** it comprises wood material having a density distribution showing a 90^{th} percentile between 300 and 460 kg/m³ and that the component is made from solid wood material.

2. The building component having a low thermal conductivity value as claimed in claim 1, wherein the lambda value of the wood material is in the range of 0.07 and 0.11 W/mK.

3. The building component having a low thermal conductivity value as claimed in any one of claims 1-2, wherein the building component is a window component.

4. The building component having a low thermal conductivity value as claimed in claim 3, wherein at least one the sash or frame of said window component comprises at least one wood lamella made from said wood material having a 90^{th} percentile density of between 300 and 460 kg/m³.

5. The building component having a low thermal conductivity value as claimed in claim 1, wherein the component is a door component.

6. The building component having a low thermal conductivity value as claimed in claim 1, wherein the component is an insulation material made from said wood material having a 90^{th} percentile density of between 300 and 450 kg/m³.

7. The building component having a low thermal conductivity value as claimed in any one of claims 1-6, wherein the wood material further comprises heartwood of pine having a pinosylvine contents of more than 5 mg/g.

8. A window frame **characterized in that** it comprises at least one wood lamella made from a wood material having a 90^{th} percentile density of between 300 and 460 kg/m³.

9. A wood lamella **characterized in that** it has been made form a wood material having a 90^{th} percentile density of between 350 and 440 kg/m³.

10. A wood lamella **characterized in that** is made from a wood material having a 90^{th} percentile density of between 350 and 400 kg/m³.

11. A method for sorting out wood material having a 90^{th} percentile density of 300-460 kg/m³ comprising the steps of:
d) selection of suitable classes of logs,
e) analyzing the selected logs with an X-ray apparatus for a density measurement of the logs, and
f) cutting the logs into boards.

12. The method for sorting out wood material having a 90^{th} percentile density of 300-460 kg/m³ as claimed in claim 11, further comprising the step of:
g.) performing a density measurement of the boards by using a density measurement device.
